# EUROPÄISCHE PATENTSCHRIFT

(11) **EP 0 987 158 B1**
(45) Veröffentlichungstag und Bekanntmachung des Hinweises auf die Patenterteilung: **28.11.2001**
(21) Anmeldenummer: 98117613.4
(22) Anmeldetag: 17.09.1998
(51) Int. Cl.: B61D 3/08, B62D 33/02

(54) **Güterzugwagen, insbesondere für den Transport von Rundhölzern**
Railway wagon, especially for the transport of round timber
Wagon ferroviaire, notamment pour le transport des bois ronds

(43) Veröffentlichungstag der Anmeldung: 22.03.2000
(73) Patentinhaber: Railtrans S.A., 78810 Feucherolles (FR)
(72) Erfinder: Jost, Dieter, 78810 Feucherolles (FR)
(74) Vertreter: Stenger, Watzke & Ring Patentanwälte

(56) Entgegenhaltungen:
- DE-A- 4 324 993

## Beschreibung

Die Erfindung betrifft einen Güterzugwagen mit einem Laufwerk, einem Untergestell und beidseitig seitlich am Güterzugwagen angeordneten Rungen, **die über** die Länge des Untergestells verstellbar **sind**.

Güterzugwagen dienen dem Transport von Gütern auf Schienen und haben vielfältige Anforderungen aufgrund der verschiedenartigen zu transportierenden Güter zu erfüllen. Grundsätzlich besteht das Bestreben, einen möglichst großen Transportbereich mit einer möglichst geringen Zahl von unterschiedlichen Güterzugwagen zu bewältigen. Gattungsgemäße Güterzugwagen, auch Rungenwagen genannt, werden insbesondere für den Transport von Rundhölzern, Stahlrohren, Stahlstäben und anderen im wesentlichen stabförmigen Gegenständen eingesetzt. Insbesondere stellt sich in diesem Zusammenhang die Aufgabe, mit einem einzigen Güterzugwagen einerseits Rohprodukte, wie beispielsweise Rundhölzer für die Verarbeitung in Sägewerken, in die Verarbeitungswerke hineinzutransportieren und anschließend nach der Entladung in einfacher Weise Fertigprodukte auf den gleichen Güterzugwagen zu laden und zum Endabnehmer zu transportieren. Ein grundsätzliches Ziel des Güterverkehrs besteht darin, eine Verkürzung der Umschlagzeiten durch Spezialwaggons für verschiedene Waren und besondere Be- und Entlademöglichkeiten zu erreichen.

Die bisher bekannten Rungenwagen bestehen aus einem vierachsigen Laufwerk, einem Untergestell mit Bremsanlage und Zug- und Stoßeinrichtung und an vorgegebenen Positionen fest mit dem Untergestell verschweißten seitlich am Wagen angeordneten Rungen.

Insbesondere beim Transport von Rundhölzern mit derartigen Güterzugwagen ist es nachteilig, daß aufgrund der fest vorgegebenen Positionen der seitlichen Rungen nur Rundhölzer bestimmter Längen geladen werden können. Ansonsten könnten kürzere Rundhölzer zwischen zwei nebeneinanderstehenden Rungen hindurch vom Güterzugwagen fallen, oder aber das Be- oder Entladen des Güterzugwagens ist aufgrund einer großen Anzahl von nebeneinanderstehenden Rungen erschwert, da Rundhölzer beim Be- oder Entladen mittig gegriffen werden müssen und gerade an der Greifstelle eine Runge im Weg stehen kann.

**Darüber hinaus ist aus der DE 43 24 993 A1 ein eingangs genannter Rungenwagen bekannt, wobei die Rungen formschlüssig auf Führungsschienen verschiebbar aufgenommen sind. Zur Arretierung der Rungen sind zusätzliche Arretierungsvorrichtungen in Form von Steckverschlüssen vorgesehen. Durch die formschlüssige Verbindung der Rungen in den Führungsschienen können höhere Belastungen, wie sie insbesondere beim Transport von Rundhölzern gegeben sind, nicht aufgenommen werden, zumindest nicht ohne die Gefahr von Verformungen, Beschädigungen oder Verklemmungen.**

**Ferner** ist es mit den bisher bekannten Rungenwagen nicht möglich, weitere Transportaufgaben zu erfüllen. Der Transportbereich ist beschränkt auf einen Transport von Rohprodukten in die Verarbeitungswerke hinein.

Der Erfindung liegt in Anbetracht dieses Standes der Technik die **Aufgabe** zugrunde, einen Güterzugwagen der eingangs genannten Art unter Meidung der beschriebenen Nachteile derart zu verbessern, daß eine größere Variabilität hinsichtlich der Einsatz- und Verwendungsmöglichkeiten gegeben ist.

Die Aufgabe ist erfindungsgemäß dadurch **gelöst**, daß **seitlich am Güterzugwagen über die Länge des Untergestells verteilt eine Vielzahl von Befestigungseinrichtungen angeordnet sind, mit denen die Rungen verschraubt werden, wozu an jeder Runge untergestellseitig eine Befestigungsplatte angeschweißt ist, die mit einer korrespondierenden Konsole an dem Untergestell verschraubt ist,** aus welcher die Befestigunseinrichtung besteht.

Durch die Verstellbarkeit der Rungen ist der erfindungsgemäße Güterzugwagen für einen Transport von Rundhölzern und dergleichen unterschiedlichster Längen einsetzbar, da die Positionen der Rungen über die Länge des Güterzugwagens je nach Bedarf für einen Transport von kurzen und/oder langen Rundhölzern auswählbar sind. Damit ist bei dem erfindungsgemäßen Güterzugwagen eine größere Variabilität hinsichtlich der Einsatz- und Verwendungsmöglichkeiten gegeben.

**Darüber hinaus** ist **durch die konstruktionsgemäße Verschraubung der Rungen** eine besonders einfach fertig- und handhabbare Verstellmöglichkeit der Rungen gegeben.

In einer weiteren vorteilhaften Ausgestaltung der Erfindung sind zwei nebeneinanderstehende Rungen in der Höhe miteinander verbunden, vorteilhafterweise außerhalb des Laderaums des Güterzugwagens, so daß Beschränkungen des Laderaums durch die Verbindung verhindert sind. Durch die Verbindung von zwei nebeneinanderstehenden Rungen in der Höhe wird die Stabilität der Rungen vergrößert, so daß diese nicht mehr so leicht verbiegen können, was ansonsten insbesondere beim Be- oder Entladen des Güterzugwagens auftreten kann. Zur Verringerung des Gewichts bei gleichzeitiger Vergrößerung der Stabilität sind zwei nebeneinanderstehende Rungen gemäß einer zweckmäßigen Ausgestaltung der Erfindung mit parallel zum Untergestell verlaufenden Sprossen leiterartig miteinander verbunden.

In einer bevorzugten Ausgestaltung der Erfindung sind zwei einander gegenüberstehende Rungen über einen Fuß, derart einen U-förmigen Körper bildend, miteinander verbunden. Dadurch ist die Stabilität der Rungen weiter vergrößert. Vorteilhafterweise ist der Fuß zum Laderaum des Güterzugwagens hin geschlossen, so daß sich im Fuß kein Schmutz ansammeln kann, der eine aufwendige Reinigung des Güterzugwagens erforderlich machen würde. Hierzu kann der Fuß eine Abdeckung aufweisen, vorzugsweise ein Blech.

In einer weiteren besonders vorteilhaften Ausgestaltung der Erfindung ist der Güterzugwagen mit Containerhalterungen versehen. Dadurch sind die Einsatz- und Verwendungsmöglichkeiten des Güterzugwagens nochmals erheblich gesteigert. Mit dem erfindungsgemäßen Güterzugwagen können beispielsweise von Schiffen in Häfen angelieferte Rohprodukte, insbesondere Rundhölzer, aufgenommen werden und in die Verarbeitungswerke, beispielsweise in ein Sägewerk, transportiert werden. Dort kann der Güterzugwagen dann nach dem Entladen der Rundhölzer mit einem Fertigprodukte des Verarbeitungswerkes enthaltenden Container versehen werden, welcher dann mit dem Güterzugwagen in den Hafen zum Verladen auf ein Schiff transportiert wird. Nach dem Entladen im Hafen kann der Güterzugwagen dann wieder Rohprodukte aus dem Hafen in die Verarbeitungswerke liefern. Mit dem erfindungsgemäßen Güterzugwagen lassen sich so die Umschlagzeiten erheblich verkürzen. Vor teilhafterweise sind die Containerhalterungen innerhalb des seitlich durch die Rungen begrenzten Laderaums am Boden desselben angeordnet, vorzugsweise im Bereich der Stirnseiten des Güterzugwagens. Dadurch müssen die Rungen zur Aufnahme eines Containers nicht erst demontiert werden, so daß aufwendige Umbaumaßnahmen zur Aufnahme eines Containers nicht erforderlich sind. Ein aufgenommener Container liegt so innerhalb der Rungen und ist damit zusätzlich in seiner Lage auf dem Güterzugwagen gesichert.

Gemäß einer besonders bevorzugten Ausführungsform der Erfindung ist der Güterzugwagen ein kurzgekoppelter Güterzugwagen mit einem zweiachsigen Laufwerk. Eine so aus zwei erfindungsgemäßen Güterzugwagen gebildete kurzgekoppelte Wageneinheit weist ein Fassungsvermögen von 145 m³ für Rundhölzer und dergleichen auf und kann bis zu 62 t laden.

Weitere Einzelheiten, Merkmale und Vorteile des Gegenstandes der Erfindung ergeben sich aus der nachfolgenden Beschreibung der zugehörigen Zeichnungen, in denen eine bevorzugte Ausführungsform eines erfindungsgemäßen Güterzugwagens schematisch dargestellt sind. In den Zeichnungen zeigen:
- Fig. 1: eine aus zwei Güterzugwagen gebildete kurzgekoppelte Wageneinheit in einer schematischen Seitenansicht,
- Fig. 2: eine verkürzt dargestellte, aus zwei Güterzugwagen gebildete kurzgekoppelte Wageneinheit gemäß Fig. 1, jedoch mit an anderer Stelle positionierten Rungen,
- Fig. 3: die kurzgekoppelte Wageneinheit der Fig. 2 in Draufsicht,
- Fig. 4: eine Ansicht auf zwei einander gegenüberliegend angeordnete und durch einen Fuß zu einem U-förmigen Körper miteinander verbundene Rungen,
- Fig. 5: eine Ansicht gemäß Linie B-B der Fig. 4 und
- Fig. 6: eine Ansicht gemäß Linie C-C der Fig. 4.

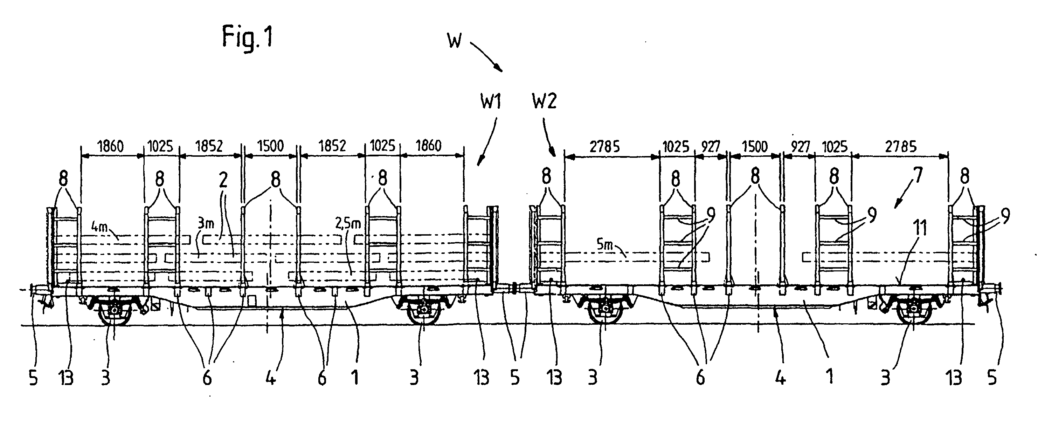

Die in Fig. 1 der Zeichnung dargestellte kurzgekoppelte Wageneinheit W setzt sich aus zwei Güterzugwagen W1 und W2 zusammen, die mit Rundhölzern 2 unterschiedlicher Länge beladen sind. Der Güterzugwagen W1 ist bestückt mit Rundhölzern von 2,5 m Länge, 3 m Länge und 4 m Länge, während die Konfiguration des Güterzugwagens W2 derart ausgestaltet ist, daß Rundhölzer von 5 m Länge als Ladegut transportierbar ist. Jeder Güterzugwagen W1 und W2 der kurzgekoppelten Wageneinheit W weist ein zweiachsiges Laufwerk 3 auf, welches in nicht im einzelnen beschriebener, bekannter Weise mit einem Untergestell 4 verbunden ist. Jedes Untergestell 4 besteht aus einem etwa in Höhe der Puffer 5 angeordneten, geschweißten Profilrahmen, der die senkrechten Belastungen, die Pufferkräfte, Zughakenkräfte und die aus dem Lauf der Wageneinheit W herrührenden senkrechten und seitlichen Massenkräfte aufnimmt.

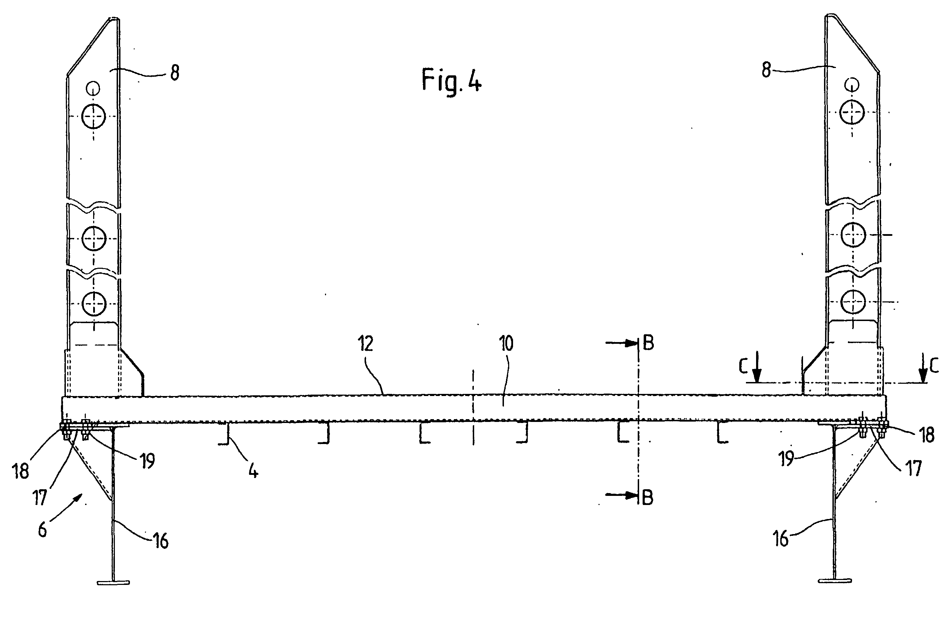

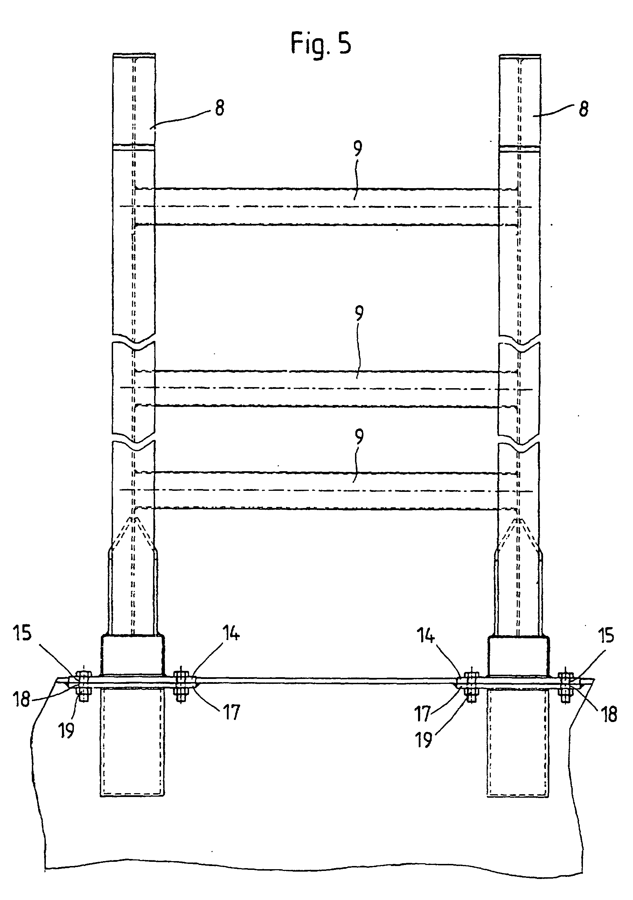

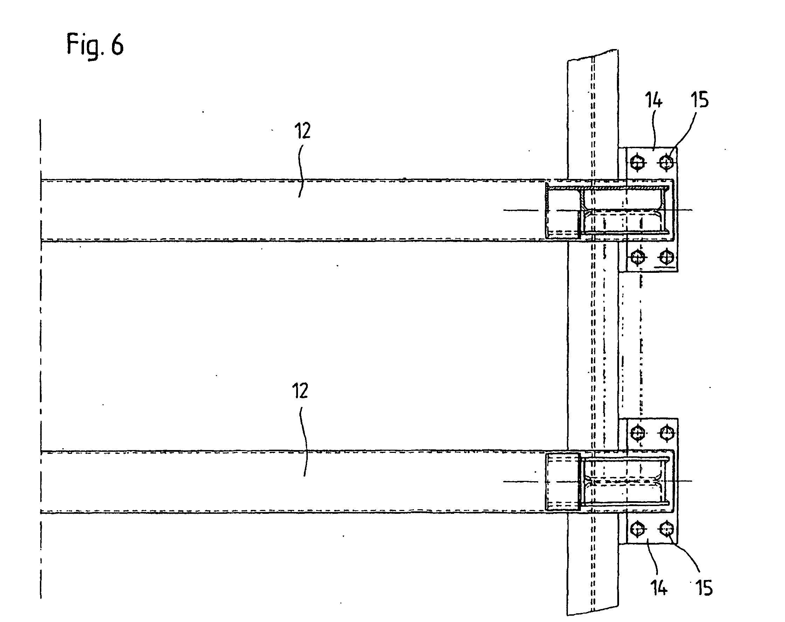

Die in Längsrichtung verlaufenden seitlichen Profilträger des Untergestells 4 sind mit der Bezugsziffer 1 für sämtliche dargestellten Güterzugwagen gekennzeichnet und weisen über ihre Länge verteilt an verschiedenen Positionen Befestigungseinrichtungen 6 zur Befestigung der den Laderaum 7 des zugehörigen Güterzugwagens W1 oder W2 seitlich begrenzenden Rungen 8 auf. Die Anordnung der Befestigungseinrichtungen 6 ist dabei derart, daß in Abhängigkeit von der Länge des Ladeguts die Rungen 8 variabel in unterschiedlichen Positionierungen am Untergestell 4 befestigt werden können, wie die beiden Güterzugwagen W1 und W2 verdeutlichen, die die Rungen 8 in unterschiedlichen Abständen tragen. Die Abstände sind zur Verdeutlichung in der Zeichnung angegeben. Die genauere Ausbildung der Befestigungseinrichtungen 6 sowie der über diese mit dem Untergestell durch Verschraubung verbundenen Rungen 8 ist den Fig. 4, 5 und 6 der Zeichnung zu entnehmen, die weiter unten im einzelnen beschrieben werden. Über die an verschiedenen Positionen der Länge nach verteilt angeordneten Befestigungseinrichtungen 6 ist die verstellbare Anordnung der Rungen 8 über die Länge des Untergestells 4 in Anpassung an unterschiedliche Längen des Ladeguts ermöglicht.

Um den Rungen 8 eine größere Stabilität und ein verstärktes Haltevermögen für das Ladegut zu verleihen, sind einige von zwei in Längsrichtung nebeneinander stehenden Rungen 8 in der Höhe außerhalb des Laderaums 7 des Güterzugwagens W1 bzw. W2 mittels Sprossen 9 leiterartig miteinander verbunden. Der gleichen Zielsetzung, nämlich einer Erhöhung der Stabilität, dient die insbesondere der Fig. 4 entnehmbare Maßnahme, jeweils zwei in Querrichtung einander gegenüberstehende Rungen über einen aus einem Stahlprofil gebildeten Fuß miteinander zu verbinden. Zwei einander in Querrichtung gegenüberstehenden Rungen 8 bilden so gemeinsam mit dem sie im Bereich des Bodens 11 verbindenden Fuß 10 einen U-förmigen Körper hoher Stabilität und Biegefestigkeit. Da im dargestellten Ausführungsbeispiel die jeden Fuß 10 bildenden Stahlprofile zum Laderaum hin offen sind und damit einer Verschmutzung im Betrieb unterliegen, die erhöhte Reinigungsaufwendungen verlangt, ist vorgesehen, jeden Fuß 10 zum Laderaum 7 des Güterzugwagens W1 bzw. W2 hin durch eine Abdeckung 12 aus Blech zu schließen.

Die Fig. 4, 5 und 6 verdeutlichen Art, Konstruktion und Befestigung der Rungen 8 am Untergestell 4 des Güterzugwagens, wobei die die Wagen selbst betreffenden Elemente aus Gründen der Übersichtlichkeit nicht eingezeichnet sind. Bei den Rungen 8 handelt es sich um senkrechte Stützen, die aus Stahlprofil- und Blechteilen durch Verschweißen zusammengesetzt sind. Zwei in Querrichtung einander gegenüberstehende Rungen 8 sind durch den Fuß 10 durch Verschweißen miteinander verbunden und durch die Blechabdeckung 12 geschützt. An der Unterseite des Fußes 10 ist unterhalb jeder Runge 8 eine nach außen überstehende und über das Untergestell 4 des Güterzugwagens vorstehende Befestigungsplatte 14 angeschweißt, die jeweils vier Bohrungen 15 für die vorzunehmende Schraubbefestigung aufweist. Am Untergestell 4 des Güterzugwagens befinden sich die korrespondierenden Befestigungseinrichtungen 6, die jeweils aus einer geschweißten und durch Verschweißen mit den Profilträgern 1 gebildeten Winkelkonsole 16 bestehen, deren Oberseite als Platte 17 ausgebildet ist, die zur Befestigung mit der Fußplatte 14 zusammenwirkt und korrespondierende Löcher 18 für die Schraubverbindungen 19 aufweist.

In verschiedenen Höhen sind an den Rungen 8 die leiterartig angeordneten Sprossen 9 zu erkennen, die verschiedene Rungen 8 in Längsrichtung miteinander verbinden.

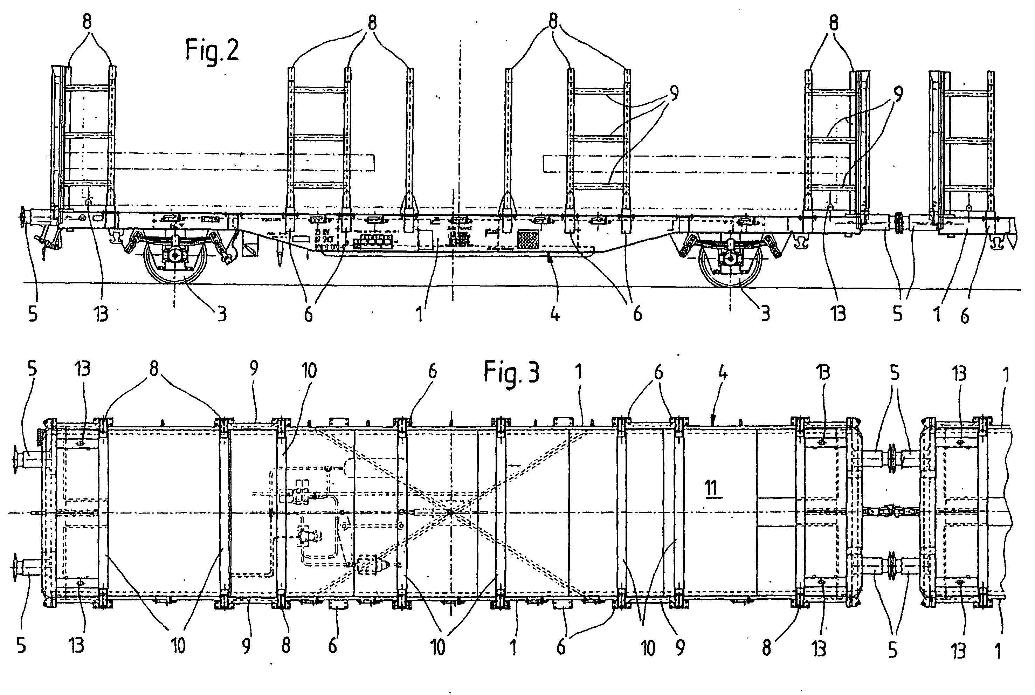

Wie schließlich anhand der Fig. 1 und 2 der Zeichnung zu erkennen ist, weisen die Güterzugwagen W1 und W2 im Bereich der Stirnseiten jeweils innerhalb des seitlich durch die Rungen 8 begrenzten Laderaums 7 am Boden 11 desselben angeordnete Containerhalterungen 13 auf, welche auf den Boden 11 aufgesetzt sind. Mit diesen Containerhalterungen 13 können die Güterzugwagen W1 und W2 jeweils einen 40-Fuß-Container aufnehmen, wobei die Rungen 8 am Güterzugwagen W1 und W2 befestigt verbleiben können.

### Bezugszeichenliste

- W: Wageneinheit
- W1: Güterzugwagen
- W2: Güterzugwagen
- 1: Profilträger
- 2: Rundhölzer
- 3: Laufwerk
- 4: Untergestell
- 5: Puffer
- 6: Befestigungseinrichtung
- 7: Laderaum
- 8: Runge
- 9: Sprosse
- 10: Fuß
- 11: Boden
- 12: Abdeckung
- 13: Containerhalterung
- 14: Befestigungsplatte
- 15: Bohrung
- 16: Winkelkonsole
- 17: Platte
- 18: Löcher
- 19: Schraubverbindungen

## Patentansprüche

1. Güterzugwagen (W) mit einem Laufwerk (3), einem Untergestell (4) und beidseitig seitlich am Untergestell (4) angeordneten Rungen (8), die über die Länge des Untergestells (4) verstellbar sind,
**dadurch gekennzeichnet,**
**daß** seitlich am Güterzugwagen (W) über die Länge des Untergestells (4) verteilt eine Vielzahl von Befestigungseinrichtungen (6) angeordnet sind, mit denen die Rungen (8) verschraubt werden, wozu an jeder Runge (8) untergestellseitig eine Befestigungsplatte (14) angeschweißt ist, die mit einer korrespondierenden Konsole (16) an dem Untergestell (4) verschraubt ist, aus welcher die Befestigungseinrichtung (6) besteht.

2. Güterzugwagen nach Anspruch 1, **dadurch gekennzeichnet, daß** die Befestigungseinrichtungen (6) an verschiedenen über die Länge des Güterzugwagens (W) verteilten Positionen in gleichem oder verschiedenem Abstand zueinander angeordnet sind.

3. Güterzugwagen nach Anspruch 1 oder Anspruch 2, **dadurch gekennzeichnet, daß** zwei auf der gleichen Seite des Güterzugwagens (W) nebeneinanderstehende Rungen (8) in der Höhe durch mindestens eine Sprosse (9) miteinander verbunden sind.

4. Güterzugwagen nach Anspruch 3, **dadurch gekennzeichnet, daß** die Rungen (8) außerhalb des Laderaums (7) des Güterzugwagens (W) miteinander verbunden sind.

5. Güterzugwagen nach Anspruch 3 oder Anspruch 4, **dadurch gekennzeichnet, daß** die Rungen (8) durch leiterartig angebrachte Sprossen (9) miteinander verbunden sind.

6. Güterzugwagen nach einem oder mehreren der Ansprüche 1 bis 5, **dadurch gekennzeichnet, daß** zwei einander in Querrichtung gegenüberstehende Rungen (8) über einen Fuß (10), derart einen U-förmigen Körper bildend, miteinander verbunden sind.

7. Güterzugwagen nach Anspruch 6, **dadurch gekennzeichnet, daß** der Fuß (10) zum Laderaum (7) des Güterzugwagens (W) hin geschlossen ist.

8. Güterzugwagen nach Anspruch 6 oder Anspruch 7, **dadurch gekennzeichnet; daß** der Fuß (10) durch eine Abdeckung (12) geschlossen ist.

9. Güterzugwagen nach Anspruch 8, **dadurch gekennzeichnet, daß** die Abdeckung (12) ein Blech ist.

10. Güterzugwagen nach einem oder mehreren der Ansprüche 1 bis 9, **dadurch gekennzeichnet, daß** dieser mit Containerhaltungen (13) versehen ist.

11. Güterzugwagen nach Anspruch 10, **dadurch gekennzeichnet, daß** die Containerhalterungen (13) innerhalb des seitlich durch die Rungen (8) beschränkten Laderaums (7) am Boden (11) desselben angeordnet sind.

12. Güterzugwagen nach Anspruch 10 oder Anspruch 11, **dadurch gekennzeichnet, daß** die Containerhalterungen (13) im Bereich der Stirnseiten des Güterzugwagens (W) angeordnet sind.

13. Güterzugwagen nach einem oder mehreren der Ansprüche 1 bis 12, **dadurch gekennzeichnet, daß** dieser ein kurzgekoppelter Güterzugwagen (W1, W2) mit einem zweiachsigen Laufwerk (3) ist.

## Claims

1. Goods train wagon (W) having a running gear (3), an underframe (4) and stanchions (8) which are arranged laterally on both sides of the underframe and are adjustable over the length of the underframe (4), **characterised in that** arranged laterally on the goods train wagon (W) and distributed over the length of the underframe (4) are numerous fastening devices (6) to which the stanchions (8) are bolted, for which purpose a fastening plate (14) is welded onto the underframe end of each stanchion (8) which is bolted to a corresponding bracket (16) on the underframe (4) of which the fastening device (6) consists.

2. Goods train wagon according to Claim 1, **characterised in that** the fastening devices (6) are arranged at different positions distributed over the length of the goods train wagon (W) at the same distance or different distances relative to one another.

3. Goods train wagon according to Claim 1 or Claim 2, **characterised in that** two stanchions (8) adjacent to one another on the same side of the goods train wagon (W) are connected to one another at height by at least one stave (9).

4. Goods train wagon according to Claim 3, **characterised in that** the stanchions (8) are connected to one another outside the cargo space (7) of the goods train wagon (W).

5. Goods train wagon according to Claim 3 or Claim 4, **characterised in that** the stanchions (8) are connected to one another by means of rungs (9) fitted in the manner of a ladder.

6. Goods train wagon according to one or more of Claims 1 to 5, **characterised in that** two stanchions (8) standing opposite one another in the transverse direction are connected to one another by a base member (10) forming in this way a U-shaped body.

7. Goods train wagon according to Claim 6, **characterised in that** the base member (10) is closed towards the cargo space (7) of the goods train wagon (W).

8. Goods train wagon according to Claim 6 or Claim 7, **characterised in that** the base member (10) is closed by a covering (12).

9. Goods train wagon according to Claim 8, **characterised in that** the covering (12) is a metal sheet.

10. Goods train wagon according to one or more of Claims I to 9, **characterised in that** this is provided with container fixing devices (13).

11. Goods train wagon according to Claim 10, **characterised in that** the container fixing devices (13) are arranged inside the cargo space (7) constrained laterally by the stanchions (8) on the floor (11) of the same.

12. Goods train wagon according to Claim 10 or Claim 11, **characterised in that** the container fixing devices (13) are arranged in the region of the end faces of the goods train wagon (W).

13. Goods train wagon according to one or more of Claims 1 to 12, **characterised in that** this is a close-coupled goods train wagon (W1, W2) having a two-axle running gear (3).

## Revendications

1. Wagon ferroviaire de marchandises (W), comportant un mécanisme de roulement (3), un châssis (4) et des ranchers (8) agencés des deux côtés latéralement sur le châssis (4) et réglables sur la longueur du châssis (4), **caractérisé en ce qu'**une multitude de dispositifs de fixation (6) sont agencés latéralement sur le wagon de marchandises (W) en répartition sur la longueur du châssis (4), auxquels les ranchers (8) sont vissés, ce pourquoi une plaque de fixation (14) est soudée du côté châssis sur chaque rancher (8), qui est vissée sur le châssis (4) avec une console correspondante (16) qui représente le dispositif de fixation (6).

2. Wagon de marchandises selon la revendication 1, **caractérisé en ce que** les dispositifs de fixation (6) sont agencés à des emplacements différents répartis sur la longueur du wagon (W) à des distances égales ou différentes les uns des autres.

3. Wagon de marchandises selon l'une ou l'autre des revendications 1 et 2, **caractérisé en ce que** deux ranchers (8) voisins sur le même côté du wagon (W) sont reliés en hauteur l'un à l'autre par au moins un barreau (9).

4. Wagon de marchandises selon la revendication 3, **caractérisé en ce que** les ranchers (8) sont reliés l'un à l'autre à l'extérieur de l'espace de chargement (7) du wagon (W).

5. Wagon de marchandises selon l'une ou l'autre des revendications 3 et 4, **caractérisé en ce que** les ranchers (8) sont reliés l'un à l'autre par des barreaux (9) agencés à la manière d'une échelle.

6. Wagon de marchandises selon l'une ou plusieurs des revendications 1 à 5, **caractérisé en ce que** deux ranchers (8) opposés l'un à l'autre en direction transversale sont reliés l'un à l'autre via un pied (10) de manière à former un corps en forme de U.

7. Wagon de marchandises selon la revendication 6, **caractérisé en ce que** le pied (10) est refermé vers l'espace de chargement (7) du wagon (W).

8. Wagon de marchandises selon l'une ou l'autre des revendications 6 et 7, **caractérisé en ce que** le pied (10) est refermé par un recouvrement (12).

9. Wagon de marchandises selon la revendication 8, **caractérisé en ce que** le recouvrement (12) est une tôle.

10. Wagon de marchandises selon l'une ou plusieurs des revendications 1 à 9, **caractérisé en ce que** celui-ci est pourvu de supports à containers (13).

11. Wagon de marchandises selon la revendication 10, **caractérisé en ce que** les supports à containers (13) sont agencés à l'intérieur de l'espace de chargement (7) délimité latéralement par les ranchers (8) au fond (11) dudit espace.

12. Wagon de marchandises selon l'une ou l'autre des revendications 10 et 11, **caractérisé en ce que** les supports à containers (13) sont agencés dans la zone des faces frontales du wagon (W).

13. Wagon de marchandises selon l'une ou plusieurs des revendications 1 à 12, **caractérisé en ce que** celui-ci est un wagon (W1, W2) à attelage serré comportant un mécanisme de roulement (3) à deux essieux.
